# EUROPÄISCHE PATENTANMELDUNG

(11) **EP 1 042 955 A1**
(43) Veröffentlichungstag der Anmeldung: **11.10.2000**
(21) Anmeldenummer: 00106005.2
(22) Anmeldetag: 27.03.2000
(51) Int. Cl.: A01N 47/40

(54) **Thiacloprid enthaltende Antifouling-Mittel**

(30) Priorität: 07.04.1999 DE 19915476; 14.05.1999 DE 19922401
(71) Anmelder: BAYER AG, 51368 Leverkusen (DE)
(72) Erfinder: Kugler, Martin, Dr., 42799 Leichlingen (DE); Kunisch, Franz, Dr., 51519 Odenthal (DE); Kretschik, Oliver, Dr., 51063 Köln (DE)

(57) **Zusammenfassung**

Beschrieben wird ein Verfahren bzw. Mittel zum Schutz von Gegenständen, welche mit See- oder Brackwasser in Verbindung kommen. Die Mittel enthalten als wesentliche Komponente Thiacloprid.

## Beschreibung

Die vorliegende Erfindung betrifft ein Verfahren und Mittel zum Schutz von Bewuchs von Gegenständen, insbesondere von Schiffskörpern, Sieben, Netzen, Bauwerken, Kainanlagen und Signalanlagen, welche mit See- oder Brackwasser in Verbindung kommen.

Bewuchs durch sessile Oligochaeten, wie Kalkröhrenwürmer sowie durch Muscheln und Arten der Gruppe Ledamorpha (Entenmuscheln), wie verschiedene lepas- und Scalpellum-Arten, oder durch Arten der Gruppe Balanomorpha (Seepocken), wie Balanus- oder Pollicipes-Species, erhöht den Reibungswiderstand von Schiffen und führt in der folge durch erhöhten Energieverbrauch und darüber hinaus durch häufige Trockendockaufenthalte zu einer deutlichen Steigerung der Betriebskosten.

Neben dem Bewuchs durch Algen, beispielsweise Ectocarpus sp. und Ceramium sp., kommt insbesondere dem Bewuchs durch sessile Entomostraken-Gruppen, welche unter dem Namen Cirripedia (Rankenflußkrebse) zusammengefaßt werden, besondere Bedeutung zu.

Es ist bereits bekannt, daß N-[3-(6-Chlorpyridin-3-ylmethyl)thiazolidin-2-yliden]cyanamid (Thiacloprid) der Formel 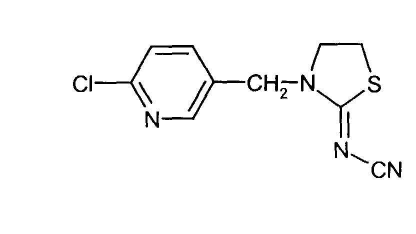 insektizide Eigenschaften besitzt (EP 235 725).

Es wurde nun überraschenderweise gefunden, daß Thiacloprid allein oder in Kombination mit anderen Wirkstoffen, eine hervorragende Antiflouling (Antibewuchs)-Wirkung aufweist.

Durch Einsatz von Thiacloprid oder von Thiacloprid in Kombination mit anderen Wirkstoffen, kann auf den Einsatz von Schwermetallen wie z.B. in Bis(trialkylzinn)-sulfiden, Tri-n-butylzinnlaurat, Tri-n-butylzinnchlorid, Kupfer(I)-oxid, Triethylzinnchlorid, Tri-n-butyl-(2-phenyl-4-chlorphenoxy)-zinn, Tributylzinnoxid, Molybdändisulfid, Antimonoxid, polymerem Butyltitanat, Phenyl-(bispyridin)-wismutchlorid, Tri-n-butylzinnfluorid, Manganethylenbisthiocarbamat, Zinkdimethyldithiocarbamat, Zinkethylenbisthiocarbamat, Zinksalz von 2-Pyridinthiol-1-oxid, Bisdimethyldithiocarbamoylzinkethylenbisthiocarbamat, Zinkoxid, Kupfer(I)-ethylen-bisdithiocarbamat, Kupferthiocyanat, Kupfernaphthenat und Tributylzinnhalogeniden verzichtet werden oder die Konzentraktion dieser Verbindungen entscheidend reduziert werden.

Gegenstand der Anmeldung sind daher Antifouling-Mittel, die entweder Thiacloprid oder Thiacloprid in Kombination mit anderen Wirkstoffen, vorzugsweise Algiziden, Fungiziden, Herbiziden, Molluskiziden bzw. anderen Antifouling-Wirkstoffen enthalten.

Gegenstand der Erfindung ist auch ein Verfahren zum Schutz von Gegenständen vor Bewuchs, das darin besteht, daß man die erfindungsgemäßen Antifouling-Mittel auf die Gegenstände aufträgt bzw. die Gegenstände mit dem Antifouling-Mittel versetzt.

Gegenstand der Erfindung ist weiterhin die Verwendung der erfindungsgemäßen Antifouling-Mittel zum Schutz von Gegenständen vor Bewuchs, insbesondere vor Bewuchs durch sessile Entomostraken und sessile Oligochaeten.

Als Kombinationspartner Für die erfindungsgemäßen Antifouling-Mittel eignen sich vorzugsweise:
Algizide wie 2-tert.-Butylamino-4-cyclopropylamino-6-methylthio-1,3,5-triazin, Dichlorophen, Diuron, Endothal, Fentinacetat, Isoproturon, Methabenzthiazuron, Oxyfluorfen, Quinoclamine und Terbutryn;
Fungizide wie Benzo[b]thiophencarbonsäurecyclohexylamid-S,S-dioxid, Dichlofluanid, Fluorfolpet, 3-Iod-2-propinyl-butylcarbamat, Tolylfluanid und Azole wie Azaconazol, Cyproconazol, Epoxyconazol, Hexaconazol, Metconazol, Propiconazol und Tebuconazol;
Molluskizide wie Fentinacetat, Metaldehyd, Methiocarb, Niclosamid, Thiodicarb und Trimethacarb;
oder herkömmliche Antifouling-Wirkstoffe wie 4,5-Dichlor-2-octyl-4-isothiazolin-3-on, Diiodmethylparatrylsulfon, 2-(N,N-Dimethylthiocarbamoylthio)-5-nitrothiazyl, Kalium-, Kupfer, Natrium- und Zinksalze von 2-Pyridinthiol-1-oxid, Pyridin-triphenylboran, Tetrabutyldistannoxan, 2,3,5,6-Tetrachlor-4-(methylsulfonyl)-pyridin, 2,4,5,6-Tetrachloroisophthalonitril, Tetramethylthiuramdisulfid und 2,4,6-Trichlorphenylmaleinimid.

Die verwendeten Antifouling-Mittel enthalten den erfindungsgemäßen Wirkstoff in einer Konzentration von 0,001 bis 50 Gew.-%, insbesondere von 0,01 bis 20 Gew.-%.

Die erfindungsgemäßen Antifouling-Mittel enthalten desweiteren üblicherweise, aber ohne sich darauf zu beschränken, die üblichen Bestandteile wie z.B. in Ungerer, *Chem. Ind.* **1985**, 37, 730-732 und Williams, Antifouling Marine Coatings, Noyes, Park Ridge, **1973** beschrieben.

Antifouling-Anstrichmittel enthalten neben den algiziden, fungiziden, molluskiziden und erfindungsgemäßen insektiziden Wirkstoffen insbesondere Bindemittel.

Beispiele für anerkannte Bindemittel sind Polyvinylchlorid in einem Lösungsmittelsystem, chlorierter Kautschuk in einem Lösungsmittelsystem, Acrylharze in einem Lösungsmittelsystem insbesondere in einem wäßrigen System, Vinylchlorid/Vinylacetat-Copolymersysteme in Form wäßriger Dispersionen oder in Form von organischen Lösungsmittelsystemen, Butadien/Styrol/Acrylnitril-Kautschuke, trocknende Öle, wie Leinsamenöl, Harzester oder modifizierte Hartharze in Kombination mit Teer oder Bitumina, Asphalt sowie Epoxyverbindungen, geringe Mengen Chlorkautschuk, chloriertes Polypropylen und Vinylharze.

Gegebenenfalls enthalten Anstrichmittel auch anorganische Pigmente, organische Pigmente oder Farbstoffe, welche vorzugsweise in Seewasser unlöslich sind. Ferner können Anstrichmittel Materialien wie Kolophonium enthalten, um eine gesteuerte Freisetzung der Wirkstoffe zu ermöglichen. Die Anstriche können ferner Weichmacher, die rheologischen Eigenschaften beeinflussende Modifizierungsmittel sowie andere herkömmliche Bestandteile enthalten. Auch in Self-Polishing-Antofouling-Systemen können Thiacloprid oder die erfindungsgemäßen Kombinationen mit Thiacloprid eingearbeitet werden.

## Patentansprüche

1. Verwendung von Thiacloprid zum Schutz von Gegenständen vor Bewuchs.

2. Antifouling-Mittel enthaltend Thiacloprid und die für Antifouling-Mittel üblichen Bestandteile.

3. Verwendung von Thiacloprid zur Herstellung von Antifouling-Mitteln bzw. Antifouling-Anstrich-Mitteln.

4. Verfahren zum Schutz von Gegenständen vor Bewuchs, dadurch gekennzeichnet, daß man Mittel den gemäß Ansprüchen 2 und 3 auf die Gegenstände aufträgt oder die Gegenstände damit versetzt.
